Europäisches Patentamt

(19) European Patent Office

Office européen des brevets

(11) Numéro de publication: **0 153 243**
**B1**

## (12) FASCICULE DE BREVET EUROPEEN

(45) Date de publication du fascicule du brevet:
**19.11.87**

(51) Int. Cl.⁴: **G 02 B 6/28**

(21) Numéro de dépôt: **85400259.9**

(22) Date de dépôt: **14.02.85**

(54) **Dispositif de commutation de fibres optiques.**

(30) Priorité: **16.02.84 FR 8402330**

(43) Date de publication de la demande:
**28.08.85 Bulletin 85/35**

(45) Mention de la délivrance du brevet:
**19.11.87 Bulletin 87/47**

(84) Etats contractants désignés:
**AT BE CH DE GB IT LI LU NL SE**

(56) Documents cités:
**EP - A - 0 067 761**
**US - A - 4 265 513**

**PATENTS ABSTRACTS OF JAPAN, vol. 4, no. 110, 8 août 1980, page 70P22**

(73) Titulaire: **SOCIETE D'OPTIQUE, PRECISION ELECTRONIQUE ET MECANIQUE - SOPELEM, 102 rue Chaptal, F-92300 Levallois-Perret (FR)**

(72) Inventeur: **Moirez, Jacques, 4 Avenue des Gobelins, F-75005 Paris (FR)**
Inventeur: **Seilin, Rémy, 42 Allée Louis Braille, F-77400 Lagny S/Marne (FR)**
Inventeur: **Baluteau, Jean-Michel, 77 Allée de Chartres, F-93190 Livry-Gargan (FR)**
Inventeur: **Saint Sevin, Michel, 1bis rue des 3 Soeurs, F-93220 Gagny (FR)**

(74) Mandataire: **Phélip, Bruno et al, c/o Cabinet Harlé & Phélip 21, rue de la Rochefoucauld, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention se rapporte à un dispositif de commutation par voie optique de fibres optiques d'émission et de réception, comportant d'une part un élément réflecteur dont la surface réflectrice fait face aux extrémités des fibres de manière à réfléchir les signaux lumineux entre une fibre d'émission et une fibre de réception et d'autre part un objectif convergent situé entre ledit réflecteur et lesdites extrémités de fibres.

On connaît notamment par US 4 304 460 ou US 4 208 094, des dispositifs du type précédent. Dans ces dispositifs connus, l'objectif est fixe et l'élément réflecteur est orientable soit autour d'un axe coaxial à l'axe optique de l'objectif soit autour d'un axe perpendiculaire à cet axe optique de l'objectif. Du fait que l'objectif est fixe, le champ de celui-ci est grand pour couvrir toutes les extrémités des fibres.

US-A-4 265 513 décrit et illustre un dispositif de commutation d'une pluralité de fibres optiques comportant une lentille avec une surface réflectrice, ladite lentille étant mobile linéairement.

La présente invention a pour but de fournir un dispositif de commutation du type précité dans lequel l'objectif présente des dimensions réduites du fait qu'il n'est pas nécessaire de couvrir la totalité des extrémités des fibres. La réduction du champ de l'objectif autorise l'emploi d'une focale relativement courte. Les tolérances de positionnemenr angulaire de l'élément réflecteur n'ont pas besoin d'être serrées (le décalage transversal des images des fibres dû à une erreur de positionnement angulaire de l'élément réflecteur est proportionné à la distance focale image de l'objectif). Les moyens moteurs électriques du dispositif n'ont pas besoin d'être alimentés en continu. Le dispositif permet de coupler des fibres dont les extrémités sont disposées aux noeuds d'un quadrillage.

Selon une caractéristique de l'invention, l'élément réflecteur est fixe de manière que sa surface réflectrice soit sensiblement parallèle au plan contenant les extrémités des fibres et l'objectif est accouplé à des moyens moteurs qui le transporte dans un plan parallèle à la surface réflectrice de manière que son axe optique reste perpendiculaire à ladite surface réflectrice et à un plan contenant les extrémités des fibres.

Selon une autre caractéristique, les extrémités des fibres sont disposées aux points d'intersection des lignes et colonnes d'un quadrillage fictif plan.

L'invention va maintenant être décrite avec plus de détails en se référant à des modes de réalisation donnés à titre d'exemples et représentés par les dessins annexés sur lesquels:

La figure 1 représente un mode de réalisation du dispositif selon l'invention destiné à la commutation de fibres dont les extrémités sont alignées.

La figure 2 représente un mode de réalisation du dispositif selon l'invention destiné à la commutation de fibres dont les extrémités sont disposées aux points d'intersection des lignes et colonnes d'un quadrillage.

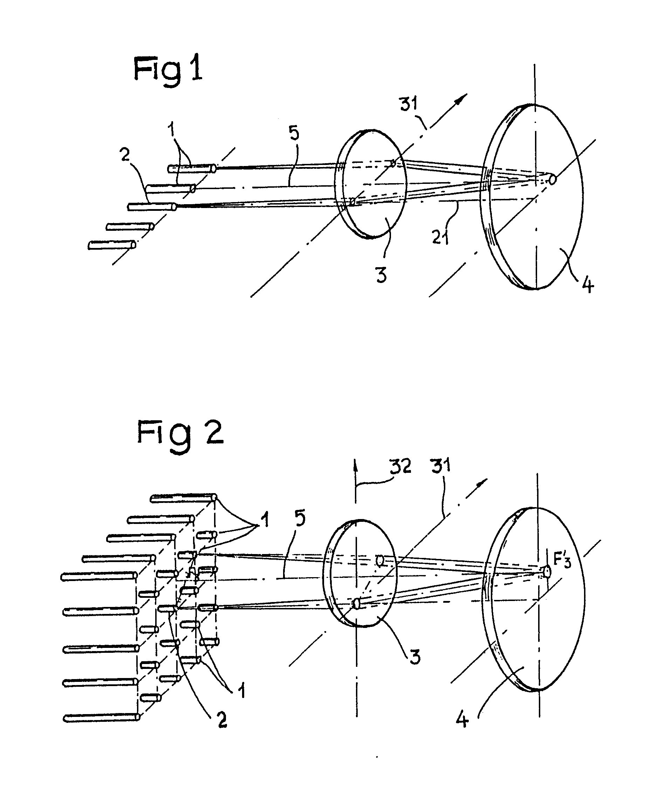

Le dispositif représenté par les figures 1 et 2 couple des fibres d'émission et de réception 1 et 2. Les extrémités de ces fibres sont orientées d'un même côté.

Une fibre repérée 2 est appelée fibre principale, les autres fibres repérées 1 étant dites fibres secondaires. Les fibres secondaires sont généralement émettrices, la fibre principale 2 étant alors réceptrice. Les fonctions des fibres pourraient être inversées, la fibre principale 2 étant émettrice et les fibres secondaires 1 réceptrices. De préférence la fibre principale présente un diamètre de coeur supérieur au diamètre de coeur des fibres secondaires, les diamètres des gaines étant sensiblement équivalents. Cet agencement permet des tolérances moins serrées pour le positionnement des composants du dispositif.

Les fibres 1 et 2 sont couplées par l'intermédiaire d'un élément réflecteur 4 et d'un objectif de collimation et de focalisation 3 convergent. Cet objectif est disposé entre les extrémités des fibres et l'élément réflecteur 4. Il collimate le faisceau venant d'une fibre émettrice et focalise le faisceau venant de l'élément réflecteur sur la fibre réceptrice 2. Cet objectif est conçu de manière à présenter un chromatisme réduit. L'élément réflecteur est du type miroir et comporte une surface réflectrice faisant face aux extrémités des fibres. L'axe optique 5 de l'objectif 3 est perpendiculaire à la surface réflectrice et au plan fictif passant par les extrémités des fibres.

Les extrémités des fibres 1 et 2 sont situées dans le plan focal objet de l'objectif 3 et la surface réflectrice de l'élément réflecteur 4 est située dans le plan focal image dudit objectif.

L'élément réflecteur 4 est séparé par un intervalle d'air de l'objectif 3. De préférence les fibres 1 et 2 sont collées sur un bloc de verre séparé par un intervalle d'air de l'objectif. La colle constitue un produit d'immersion en bout des fibres et l'ensemble «fibres-bloc de verre» est «figé» quelle que soit la température d'utilisation ce qui évite les problèmes liés à la dilatation et permet donc de diminuer les pertes de flux au couplage. La face extérieure du bloc de verre peut présenter un traitement anti-réfléchissant pour réduire de manière importante les pertes de Fresnel.

L'élément réflecteur 4 est fixe. L'objectif 3 est déplacé dans un plan parallèle à la surface réflectrice de l'élément 4 de manière que son axe optique 5 reste perpendiculaire à ladite surface réflectrice.

Dans le mode de réalisation de la figure 1, les extrémités des fibres 1 et 2 sont rangées sur une même ligne fictive coupant perpendiculairement l'axe optique 5. L'objectif 3 est déplacé selon une direction 31 parallèle à cette ligne fictive.

Le mécanisme de déplacement de l'objectif peut comporter, à titre indicatif, deux colonnettes sur lesquelles coulisse le support de l'objectif, un ressort de rappel permettant de s'appuyer toujours du même côté des colonnettes pour s'affranchir des jeux. Le support de l'objectif est déplacé par l'intermédiaire d'un excentrique entraîné en rotation par un moto-réducteur, le moteur étant du type pas à pas.

Dans le mode de réalisation de la figure 2, les extrémités des fibres 1 et 2 sont disposées aux points d'intersection des lignes et colonnes d'un quadrillage fictif disposé dans un plan parallèle à la surface réflectrice. L'objectif 3 est déplacé selon deux axes perpendiculaires 31 et 32 l'un par rapport à l'autre, l'un étant parallèle aux lignes du quadrillage, l'autre étant parallèle aux colonnes de ce même quadrillage.

Le fonctionnement du dispositif va maintenant être expliqué.

En position neutre, l'axe optique 5 de l'objectif est centré sur la fibre principale 2. Dès que l'axe optique 5 de l'objectif est décalé de cette position neutre, l'objectif permet le couplage d'une fibre secondaire 1 à la fibre principale 2.

Le faisceau d'émission venant d'une fibre secondaire 1 est collimaté par l'objectif 3 sur l'élément réflecteur 4. Le faisceau parallèle est réfléchi par l'élément réflecteur 4 sur l'objectif 3 qui focalise le faisceau sur la fibre principale 2. Le déplacement de l'axe de l'objectif par rapport à l'axe neutre coaxial à la fibre principale 2 est sensiblement égal à la moitié de la distance entre les extrémités des fibres 2 et 1 que l'on veut coupler.

Le flux émis par un point d'une fibre émettrice se situe dans un cône dont l'axe est normal à la surface émettrice de la fibre. De la même façon la fibre de réception ne transmet que des rayons arrivant dans un cône dont l'axe est normal à la surface d'entrée de la fibre. Du fait que la surface réflectrice est positionnée dans le plan image de l'objectif, tous les axes des cônes de lumière émis par les points de la surface émettrice d'une fibre émettrice arrivent perpendiculairement sur la surface d'entrée de la fibre réceptrice.

Autrement dit le dispositif optique décrit est tel que la pupille d'entrée et la pupille de sortie sont rejetées à l'infini, la pupille intermédiaire étant située dans le plan focal image de l'objectif 3 c'est-à-dire sur la surface réflectrice.

Dans le mode de réalisation de la figure 1, si la surface réflectrice fait un angle différent de 90° avec l'axe 21, cet angle étant mesuré dans le plan 21, 31, on peut rattraper ce défaut par une translation de l'objectif.

A titre indicatif, pour une focale égale à 35 mm et avec des fibres à gradient l'indice présentant un diamètre de coeur de 50 microns et un diamètre de gaine de 125 microns, une défocalisation de 10 microns entraîne une perte de 0,5 dB.

Il est bien entendu que l'on peut, sans sortir du cadre de l'invention, imaginer des variantes et des perfectionnements de détail et de même envisager l'emploi de moyens équivalents.

**Revendications**

1. Dispositif de commutation de fibres optiques d'émission et de réception (1, 2), comportant d'une part un élément réflecteur (4) qui réfléchit les signaux lumineux entre une fibre d'émission et une fibre de réception et d'autre part un objectif convergent (3) situé entre ledit élément réflecteur et lesdites extrémités des fibres, caractérisé par le fait que l'élément réflecteur (4) est fixe de manière que sa surface réflectrice soit sensiblement parallèle au plan contenant les extrémités des fibres et que l'objectif (3) est accouplé à des moyens moteurs susceptibles de le transporter selon au moins une direction dans un plan parallèle à la surface réflectrice de manière que son axe optique (5) reste perpendiculaire à ladite surface réflectrice.

2. Dispositif selon la revendication 1, caractérisé par le fait que les extrémités des fibres d'émission et de réception (1, 2) sont rangées sur une même ligne fictive et que les moyens moteurs transportent l'objectif (3) selon une direction parallèle à ladite ligne fictive.

3. Dispositif selon la revendication 1, caractérisé par le fait que les extrémités des fibres (1, 2) sont disposées aux points d'intersection des lignes et colonnes d'un quadrillage fictif plan et que les moyens moteurs transportent l'objectif (3) selon deux directions perpendiculaires.

4. Dispositif selon l'une quelconque des revendications précédentes, caractérisé par le fait que les extrémités des fibres (1 et 2) sont collées sur un bloc de verre séparé par un intervalle d'air de l'objectif.

5. Dispositif selon l'une quelconque des revendications précédentes, caractérisé par le fait que les extrémités des fibres sont situées dans le plan focal objet de l'objectif et que la surface réflectrice de l'élément réflecteur (4) est située dans le plan focal image dudit objectif (3).

6. Dispositif selon l'une quelconque des revendications précédentes, caractérisé par le fait que les moyens de transport de l'objectif comprennent au moins une colonnette pour guider rectilignement le support de l'objectif qui est transporté par un mécanisme à excentrique entraîné par un moto-réducteur.

**Patentansprüche**

1. Kommutierungsvorrichtung mit optischen Emissions- und Empfangsfasern (1, 2), umfassend einerseits ein Reflektorelement (4), das die Lichtsignale zwischen einer Emissionsfaser und einer Empfangsfaser reflektiert, und andererseits ein Konvergenzobjektiv (3), das zwischen dem Reflektorelement und den genannten Enden der Fasern angeordnet ist, dadurch gekennzeichnet, dass das Reflektorelement (4) so feststehend ist, dass seine reflektierende Oberfläche im wesentlichen parallel zur Ebene verläuft, die die Enden der Fasern enthält, und dass das Objektiv (3) mit motorischen Mitteln gekoppelt ist, die es in wenigstens eine Richtung in einer Ebene parallel zur reflektierenden Oberfläche so transportieren, dass seine optische Achse (5) im wesentlichen senkrecht zur reflektierenden Oberfläche bleibt.

2. Vorrichtung nach Anspruch 1, dadurch gekennzeichnet, dass die Enden der Emissions- und Empfangsfasern (1, 2) auf einer gleichen angenommenen Linie angeordnet sind, und dass die motorischen Mittel das Objektiv (3) in eine Richtung parallel zur genannten angenommenen Linie transportieren.

3. Vorrichtung nach Anspruch 1, dadurch gekennzeichnet, dass die Enden der Fasern (1, 2) an den Schnittpunkten der Linien und Spalten einer Ebene eines angenommenen Liniennetzes angeordnet sind und die motorischen Mittel das Objektiv (3) in zwei senkrechten Richtungen transportieren.

4. Vorrichtung nach irgendeinem der vorstehenden Ansprüche, dadurch gekennzeichnet, dass die Enden der Fasern (1 und 2) an einen Glasblock, der vom Objektiv durch eine Luftstrecke getrennt ist, geklebt sind.

5. Vorrichtung nach irgendeinem der vorstehenden Ansprüche, dadurch gekennzeichnet, dass die Enden der Fasern in der Fokusebene des Objektivs liegen und die reflektierende Oberfläche des Reflektorelements (4) in der Fokusebene dieses Objektivs (3) angeordnet ist.

6. Vorrichtung nach irgendeinem der vorstehenden Ansprüche, dadurch gekennzeichnet, dass die Mittel zum Transport des Objektivs wenigstens eine kleine Säule zur geradlinigen Führung des Trägers des Objektivs umfassen, das durch einen Exzentermechanismus transportiert wird, der durch ein motorisches Untersetzungsgetriebe angetrieben wird.


### Claims

1. Device for switching emission and reception optical fibres (1, 2), comprising, on the one hand, a reflector element (4) which reflects the light signals between an emission fibre and a reception fibre and, on the other hand, a converging objective (3) situated between the said reflector element and the said ends of the fibres, characterized in that the reflector element (4) is fixed in such a manner that its reflecting surface is substantially parallel to the plane containing the ends of the fibres, and in that the objective (3) is coupled to motor means capable of transporting it in at least one direction in a plane parallel to the reflecting surface in such a manner that its optical axis (5) remains perpendicular to the said reflecting surface.

2. Device according to Claim 1, characterized in that the ends of the emission and reception fibres (1, 2) are arranged on a same individual imaginary line, and in that the motor means transport the objective (3) in a direction parallel to the said imaginary line.

3. Device according to Claim 1, characterized in that the ends of the fibres (1, 2) are disposed at the points of intersection of the lines and columns of a plane imaginary grid, and in that the motor means transport the objective (3) in two perpendicular directions.

4. Device according to any one of the preceding claims, characterized in that the ends of the fibres (1 and 2) are cemented to a glass block which is separated from the objective by an air gap.

5. Device according to any one of the preceding claims, characterized in that the ends of the fibres are situated in the object focal plane of the objective, and in that the reflecting surface of the reflector element (4) is situated in the image focal plane of the said objective (3).

6. Device according to any one of the preceding claims, characterized in that the means for transporting the objective comprise at least one small column to guide rectilinearly the support of the objective which is transported by an eccentric mechanism driven by a gear motor.

# Fig 1

# Fig 2